**Europäisches Patentamt**

**European Patent Office**

**Office européen des brevets**

(19)

(11) Veröffentlichungsnummer: **0 220 361 B1**

# EUROPÄISCHE PATENTSCHRIFT

(12)

(45) Veröffentlichungstag der Patentschrift:
28.11.90

(51) Int. Cl.⁵: **G08B 13/18**

(21) Anmeldenummer: 86103324.9

(22) Anmeldetag: **12.03.86**

(54) **Flächensicherung.**

(30) Priorität: **28.08.85 DE 3530646**

(43) Veröffentlichungstag der Anmeldung:
**06.05.87 Patentblatt 87/19**

(45) Bekanntmachung des Hinweises auf die Patenterteilung:
**28.11.90 Patentblatt 90/48**

(84) Benannte Vertragsstaaten:
**AT CH DE FR GB LI NL SE**

(56) Entgegenhaltungen:
**DE-A- 2 403 052**
**DE-A- 2 438 221**
**DE-A- 2 528 125**
**DE-A- 2 540 741**
**DE-A- 2 805 423**
**DE-A- 3 134 815**
**DE-C- 765 353**
**DE-C- 3 020 483**
**GB-A- 715 444**

(73) Patentinhaber: **Telenot Electronic GmbH,
Postfach 1827 Wiesentalstrasse 42-44,
D-7080 Aalen-Hammerstadt(DE)**

(72) Erfinder: **Haag, Günter, Dr.rer.nat., Dipl.-Phys.,
Hessenlauweg 10 B, D-7000 Stuttgart 80(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Flächensicherung gemäß dem Oberbegriff des Anspruchs 1. Eine solche Sicherung ist z.B. aus DE-C-3 020 483 bekannt.

Bekannt sind nach verschiedenen physikalischen Prinzipien arbeitende Flächensicherungen. So ist es nach GB-PS 715 444 bekannt, eine Fläche zu überwachen, indem ein Lichtstrahl mittels eines rotierenden Spiegels über eine lichtreflektierende Leiste bewegt wird, die auf einer Seite der zu überwachenden Fläche angeordnet ist. Von dieser Leiste wird der Lichtstrahl einer zweiten Reflexionsleiste, bestehend aus Trippelspiegeln, auf der anderen Flächenseite zuefährt und gelangt nach Reflexion zurück zum rotierenden Spiegel und von dort zu einem Empfänger. Diese Einrichtung ist in ihrem Aufbau sehr aufwendig, schwer zu justieren und daher als Melder im Bereich der Sicherheitstechnik nicht geeignet.

Aus der DE-PS 765 353 ist eine Flächensicherung bekannt, bei der auf beiden Seiten der zu überwachenden Fläche reflektierende Leisten angeordnet sind und das von einer, auf einer Seite der Fläche vorgesehenen Lichtquelle ausgehende Licht nach mehreren Reflexionen an diesen Leisten einem, auf der anderen Flächenseite vorgesehenen Empfänger zugeführt wird. Diese Anlage ist ebenfalls sehr aufwendig, erschütterungsempfindlich und schwer zu justieren, da die exakte Einstellung von zwei Spiegeln erforderlich ist.

Aus der DE-OS 3 134 815 ist eine Flächensicherung bekannt, bei welcher entlang einer Seite der abzusichernden Fläche eine über ihre gesamte Länge Strahlung emittierende Quelle und entlang der anderen Seite eine reflektierende Leiste angeordnet ist, und daß an beiden Enden der Strahlungsquelle jeweils ein Strahlungsdetektor vorgesehen und mit einer Auswerteschaltung verbunden ist. Diese Flächensicherung besitzt die eingangs erwähnten Nachteile der Justier- und Erschütterungsempfindlichkeit nicht und ist in ihrem Aufbau einfach. Auch zeichnet sich diese Einrichtung durch ein sehr dichtes Strahlungsfeld und demzufolge durch eine hohe Ansprechempfindlichkeit aus. Problematisch beim Einsatz dieser Flächensicherung im Einbruch-Meldebereich ist allerdings die mögliche Fehlalarmanfälligkeit. Um bei Ausführung der Flächensicherung als Durchgriffsicherung kleine Objekte noch sicher detektieren zu können, ist es notwendig, die Ansprechempfindlichkeit sehr gering (ca.1%) zu wählen. Dies bedingt erfahrungsgemäß, daß lokale Feldstörungen, z.B. hervorgerufen durch Insekten, ebenfalls angezeigt werden und damit Fehlalarm auslösen. Der Ausfall von Bauelementen, insbesondere von Sende-und Empfangselementen sollte ebenfalls nicht zu einer Herabsetzung der Funktionstüchtigkeit der Flächensicherung führen, etwa durch das Entstehen von "Löchern" in der zu überwachenden Fläche. Dies ist bei der eingangs beschriebenen Flächensicherung ebenfalls nicht gewährleistet.

Der Erfindung liegt die Aufgabe zugrunde, eine Flächensicherung der beschriebenen Art zu schaffen, unter Beseitigung der eingangs erwähnten Nachteile. Der Fehlalarmsicherheit, Sabotagesicherheit, Justier- und Erschütterungsunempfindlichkeit wird ein besonderer Wert beigemessen. Die Flächensicherung soll nur einen geringen Stromverbrauch besitzen und muß errichterfreundlich sein. Die Flächensicherung muß in ihrem elektronischen und mechanischen Aufbau so gestaltet sein, daß sie zur Absicherung von Flächen unterschiedlichsten Abmessungen geeignet ist.

Diese Aufgabe wird durch die im Anspruch 1 gekennzeichneten Merkmale dadurch gelöst, daß entlang einer Seite der abzusichernden Fläche eine Sende- und Empfangsleiste angeordnet ist, die in Sendebereiche und Empfangsbereiche unterteilt ist, dadurch gekennzeichnet, daß die Sendebereiche aus mehreren, nebeneinander angeordneten Sendeelementen bestehen, die in mindestens zwei Gruppen zusammengefaßt sind und die Empfangsbereiche aus mehreren, nebeneinander angeordneten Empfangselementen bestehen, wobei die Empfangselemente ebenfalls in mindestens zwei Gruppen zusammengefaßt sind und die Flächensicherung so ausgestaltet ist, daß von den Sendeelementen ausgehende modulierte Licht entweder nach Reflexion an einer entlang der anderen Seite angeordneten Reflexionsleiste, welche aus parallelen Prismen aufgebaut ist, auf die Empfangsbereiche gelangt oder direkt auf die Empfangsbereiche einer weiteren Sende- und Empfangsleiste gelangt, die anstelle der Reflexionsleiste entlang der anderen Seite zugeordnet ist und daß durch eine Ansteuerschaltung den einzelnen, zeitversetzt arbeitenden Gruppen von Sendeelementen jeweils bestimmte Gruppen von Empfangselementen zugeordnet werden, und daß eine Mehrkanalauswertung, die mit der Ansteuerschaltung gekoppelt ist vorgesehen ist, die die verschiedenen Gruppen von Empfangselementen ausgehenden Signale vergleicht.

Ausgestaltungen der Erfindung sind in den Unteransprüchen beschrieben.

Als Sendeelemente eignen sich insbesondere im infraroten lichtemittierende Dioden, IRED's, die sich durch eine sehr gute Quantenausbeute und hohe Lebensdauer auszeichnen. Die Empfangselemente werden entsprechend der Emissionswellenlänge der Sendeelemente ausgewählt. Sende- und Empfangselemente sind in einer Sende- und Empfangsleiste untergebracht, die in Sendebereiche und Empfangsbereiche unterteilt ist. Im Profil der Sende- und Empfangsleiste befindet sich ebenfalls die Ansteuer-und Auswerteelektronik der Flächensicherung. Mehrere Sendeelemente eines Sendebereichs sind nebeneinander auf einem Sendermodul angeordnet. Ebenso befinden sich mehrere Empfangselemente eines Empfangsbereichs nebeneinander in einem Empfängermodul. In einem Empfängermodul können ebenfalls optische Bauelemente, z.B. eine Zylinderlinse, zur optischen Verstärkung der Signale und und einer Verbesserung des Signal/Rausch-Verhältnisses untergebracht sein, falls dies erforderlich ist. Vor den Sender- und Empfängermodulen befindet sich, eingebracht in das Profil der Sende- und Empfangsleiste, ein geeignetes Filter. Im Einbruch- Meldebereich wird vorzugsweise ein Infrarot- Filter verwendet, um Tageslichteinflüsse weitehend zu eliminieren und gleichzeitig die Einsicht in den Aufbau der Anlage von außen zu verhindern. Durch eine geeignete Anordnung von Sendermodulen und Empfängermodulen kann die Länge der Sende- und Empfangsleiste den jeweligen Erfordernissen angepaßt werden. Die Enden der Sende- und Empfangsleiste werden jeweils durch eine Endkappe verschlossen. Bei unzulässiger Entfernung einer Endkappe erfolgt eine Meldung.

Es ist zweckmäßig, den Aufbau der Sendermodule so vorzunehmen, daß die Sendeelemente in zwei Gruppen unterteilt sind, wobei die Gruppeneinteilung so erfolgt, daß die nebeneinander angeordneten Sendeelemente abwechselnd zur einen oder anderen Gruppe gehören. Durch eine Ansteuerschaltung werden die Sendeelemente der jeweiligen Gruppe wechselseitig angesteuert, so daß jeweils die Sendeelemente einer Gruppe gleichzeitig modulierte Lichtimpulse aussenden, die verschiedenen Gruppen der Sendeelemente jedoch nacheinander angesteuert werden. Die Empfängermodule beinhalten im einfachsten Fall zwei Empfangselemente, deren Signale zwei Auswertekanälen zugeführt werden. Die Ansteuerschaltung ist so gestaltet, daß jeweils eine bestimmte Gruppe von Sendeelementen einer bestimmten Gruppe von Empfangselementen zugeordnet ist. Es erfolgt nur dann die Meldung eines Alarms, wenn an beiden Auswertekanälen eine unzulässige Beeinflußung detektiert wird. Dies bedeutet, daß mindestens zwei benachbarte Sendeelemente oder Empfangselemente abgedeckt sein müssen und dies für einen bestimmten Zeitraum, damit das Alarmkriterium erfüllt ist. Die Minimalzeit der erforderlichen Abdeckung zur Auslösung von Alarm ist durch die Umschaltzeit zwischen den Auswertekanälen gegeben. Durch diesen erfindungsgemäßen Aufbau ist eine große Fehlalarmsicherheit gewährleistet. Lokale Störungen des Lichtfeldes, wie sie etwa durch Insekten hervorgerufen werden können, führen daher im allgemeinen nicht zur Auslösung von Fehlalarm. Dies ist insbesondere für den Einsatz der Flächensicherung im Einbruch-Meldebereich von entscheidender Bedeutung.

Um Sabotageversuche im unscharf- Zustand erkennen zu können, wie etwa das Abkleben einer bestimmten Gruppe von Sendeelementen oder auch den Ausfall von Bauelementen zu detektieren, ist es zweckmäßig, die einzelnen Auswertekanäle im unscharf- Zustand mittels einer ODER- Verknüpfung zu verkoppeln. Ebenso ist eine Überwachung der Gesamtintensität der empfangenen Lichtimpulse und der Versorgungsspannung vorgesehen. Hierdurch wird erreicht, daß Sabotageversuche mittels geeignet moduliertem Fremdlicht erkannt werden sowie eine langsam eintretende Verschmutzung, bei Erreichen eines bestimmten vorgegebenen Schwellwertes, erkannt und beseitigt werden kann. Entsprechende Schwellwerte werden den allgemeinen Zulassungsrichtlinien des jeweiligen Landes entnommen.

Eine Anpassung der Flächensicherung an die beschriebenen langsam eintretenden Veränderungen der Umwelt oder der Bauelemente wird erfindungsgemäß dadurch erzielt, daß die jeweils zu einer Gruppe gehörenden Signale der Empfangselemente addiert werden und die Ansteuerelektronik nacheinander jeweils die Summensignale der Empfängergruppen über einen gemeinsamen selektiven Verstärker verstärkt und nach der Verstärkung durch die Ansteuerelektronik erneut eine Trennung der Signale erfolgt und die Werte der Signale in einer nachgeschalteten Sample-and Hold Anordnung für einen Zeittakt gespeichert werden und jeder Sample-and Hold Anordnung zwei Interatoren parallel nachgeschaltet sind mit unterschiedlichen Integrationszeiten und die Ausgänge der Integratoren mit einem Komparator mit einstellbarem Schwellwert verbunden sind und bei einer unzulässigen Beeinflussung eines Auswertekanals der Wert der Langzeit-Integation gespeichert werden kann, solange die unzulässige Beeinflussung gegeben ist.

Durch ihren speziellen Aufbau wird die Flächensicherung justier-und erschütterungsunempfindlich. Auch erfordert die erfindungsgemäße elektronische Ausgestaltung lediglich das Einstellen eines Pegels durch den Errichter der Anlage, unabhängig von den geometrischen Verhältnissen der abzusichernden Fläche. Der modulare Aufbau der elektronischen Ansteuerschaltung und der Auswerteschaltung bietet sich für den Einsatz moderner Technologien (z.B. Gate-Arrays und Mikroprozessoren) vorteilhaft an. Es ist dadurch möglich, die Stromaufnahme der Flächensicherung mit bisherigen passiven Meldesystemen vergleichbar zu halten. Dies sichert den erwünschten großen Einsatzbereich der Flächensicherung.

Wird an den gegenüberliegenden Seiten der abzusichernden Fläche jeweils eine Sende-und Empfangsleiste angeordnet und das von den Sendeelementen ausgehende modulierte Licht von den Empfangselementen der gegenüber angeordneten Sende-und Empfangsleiste aufgenommen und ausgewertet, so erhält man eine zuverlässige und kostengünstige Flächensicherung zur Absicherung großer Flächen. Diese erfindungsgemäße Ausgestaltung ist insbesondere für den Einsatz unter rauhen Arbeitsbedingungen, etwa zur Freilandsicherung, geeignet.

Weitere zweckmäßige Ausgestaltungen der Flächensicherung sind in den Unteransprüchen 2 - 8 beschrieben.

Wichtige Anwendungsfelder der neuen Flächensicherung liegen in ihrer Ausbildung als Melder im Bereich der Sicherheitstechnik, als Lichtvorhang zur Maschinensicherung bzw. Maschinensteuerung und als Zeitgeber bei Geschwindigkeits-und Zeitmessungen.

Die Erfindung wird nun im folgenden anhand der Figuren 1 - 9 der beigefügten Zeichnungen in ihrem Aufbau, ihrer Wirkung und Anwendung näher erläutert. Dabei zeigen im einzelnen:

Fig.1 ein Ausführungsbeispiel der Flächensicherung, bestehend aus einer Sende-und Empfangsleiste und einer Reflexionsleiste;

Fig.2 ein Ausführungsbeispiel einer elektronischen Schaltung zur Ansteuerung der Sendeelemente und Auswertung der empfangenen Signale;

Fig.3 ein möglicher zeitlicher Verlauf des Ansteuerimpulses der Sendeelemente;

Fig.4 den zeitlichen Verlauf eines Ansteuerimpulses der Sendeelemente und eine mögliche zeitliche Beschneidung des empfangenen und verstärkten Signals;

Fig.5 den zeitlichen Verlauf der Spannungen an verschiedenen Punkten der Schaltung nach Fig. 2;

Fig.6 eine mögliche konstruktive Ausgestaltung der Flächensicherung;

Fig.7 ein Ausführungsbeispiel der Flächensicherung, bestehend aus zwei sich gegenüber befindlichen Sende-und Empfangsleisten;

Fig.8 eine Skizze zur Veranschaulichung der flächenhaften Abdeckung gemäß Fig.7;

Fig.9 ein Ausführungsbeispiel der Schaltung einer Flächensicherung gemäß Fig.7.

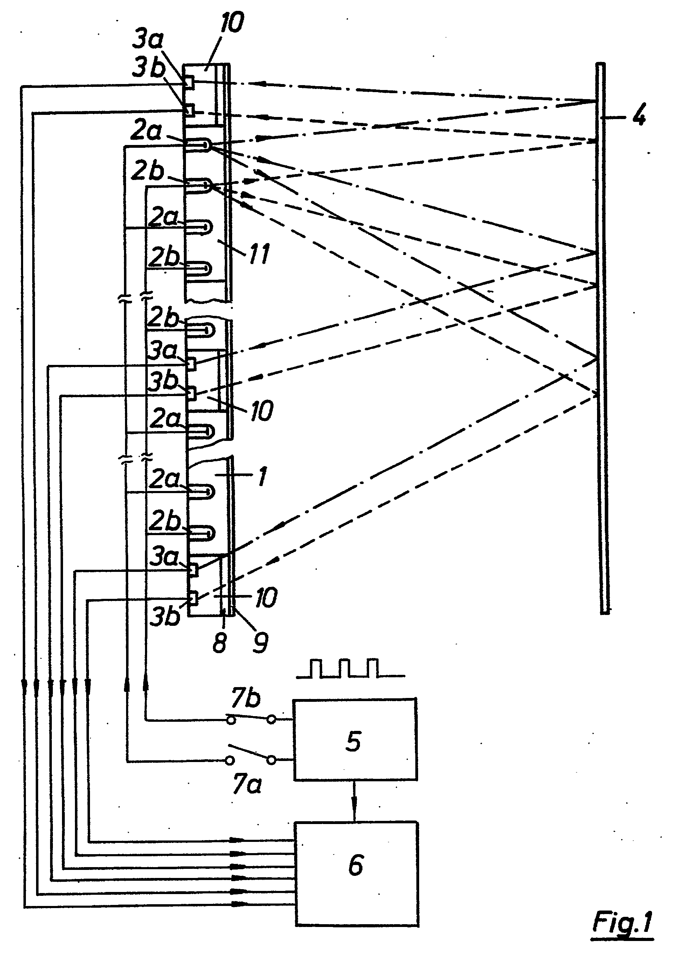

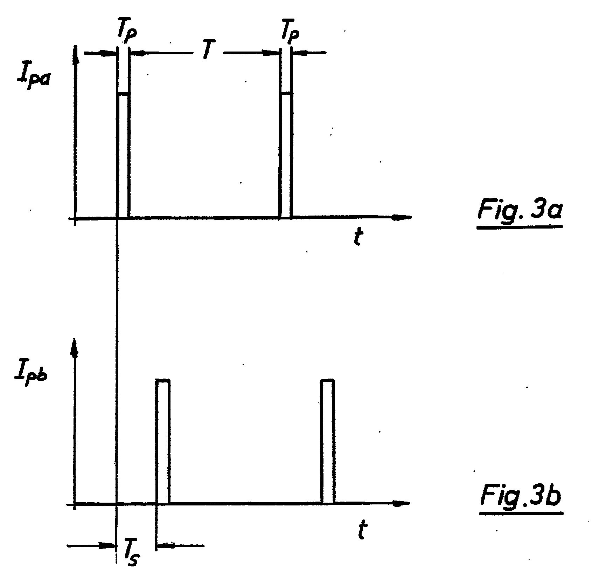

In Fig.1 ist mit 1 die Sende- und Empfangsleiste bezeichnet, welche aus Sendermodulen 11 und Empfängermodulen 10 aufgebaut ist. Vor den Sender- und Empfängermodulen 11, 10 befindet sich ein Infrarotfilter 9, dessen Aufgabe es ist, eine mögliche Einsicht in den Aufbau der Flächensicherung zu verhindern und Tageslichteinflüsse weitgehend zu unterdrücken. Die Sendeelemente 2 sind hier beispielhaft nebeneinander angeordnet und in zwei Gruppen 2a und 2b zusammengefaßt. Ein Sendermodul 11 besteht hier aus je zwei Sendeelementen 2a und 2b. Selbstverständlich kann ein Sendermodul auch aus mehr Sendeelementen 2a, 2b aufgebaut sein. Ein Empfängermodul 10 beinhaltet hier zwei Empfangselemente 3a, 3b, deren Signale einer Auswerteelektronik 6 zugeführt werden. Durch eine Zylinderlinse 8 wird das optische Signal/Rausch- Verhältnis verbessert. Die Ansteuerschaltung 5 und die Auswerteschaltung 6 sind so ausgeführt, daß den Sendeelementen 2a, (2b) die Empfangselemente 3a, (3b) zugeordnet sind. Die Ansteuerschaltung 5 steuert mittels zweier Schaltelemente 7a, 7b wechselseitig die Sendeelemente 2a, 2b an, so daß jeweils die Sendeelemente einer Gruppe gleichzeitig geeignet modulierte Lichtimpulse aussenden, die verschiedenen Gruppen 2a, 2b der Sendeelemente jedoch nacheinander angesteuert werden (vgl. Fig.3a, 3b). In Fig.1 sind beispielhaft einige mögliche Lichtwege von Sendeelementen 2a, 2b zu den entsprechenden Empfangselementen 3a, 3b dargestellt. Das von den Sendeelementen 2a, 2b ausgestrahlte modulierte Licht gelangt nach Reflexion an der Reflexionsleiste 4 auf die Empfangselemente 3a, 3b. Die Reflexionsleiste 4 ist so gestaltet, daß sie vorzugsweise das Licht in der durch Sende-und Empfangsleiste 1 und Reflexionsleiste 4 aufgespannten Ebene reflektiert. Dies kann z.B. durch Verwendung einer aus parallelen Prismen aufgebauten Reflexionsleiste geschehen. Um lokale Störungen zu eliminieren, erfolgt nur dann die Meldung eines Alarms, wenn mindestens zwei benachbarte Sendeelemente 2a und 2b und/oder Empfangselemente 3a und 3b abgedeckt sind. Die Minimalzeit der Abdeckung zur Auslösung von Alarm ist durch die Umschaltzeit zwischen den Auswertekanälen, $T_s$, gegeben (vgl. Fig.3). Dies bedingt die hohe Sicherheit der Flächensicherung gegenüber Fehlalarm. Selbstverständlich ist es denkbar und möglich eine andere Gruppeneinteilung der Sende- und Empfangselemente 2, 3 zu wählen und diese in geeigneter Weise in Sendermodulen 11 und Empfängermodulen 10 anzuordnen.

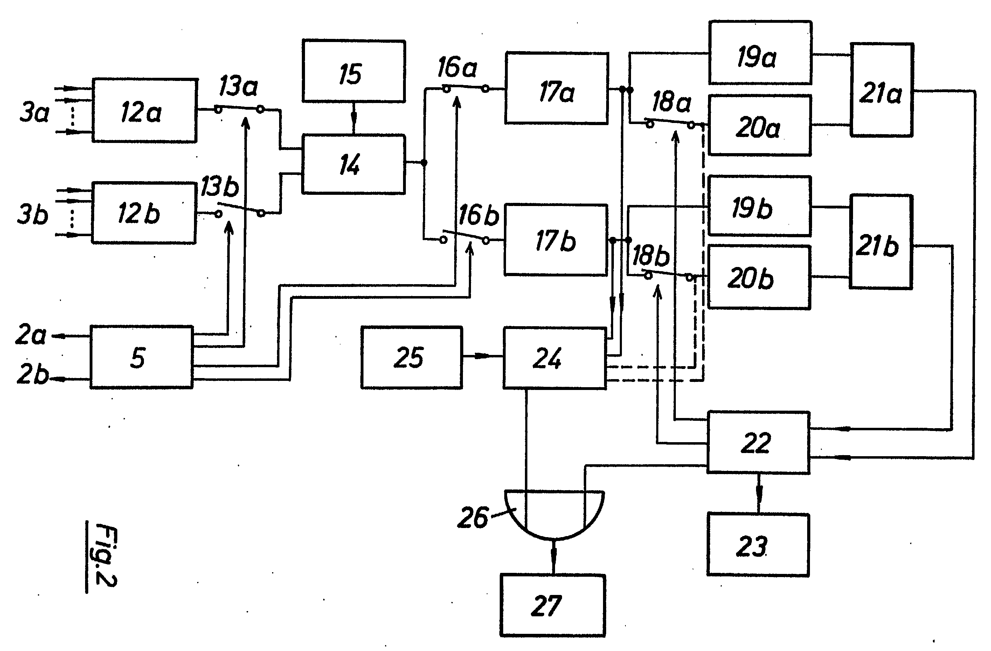

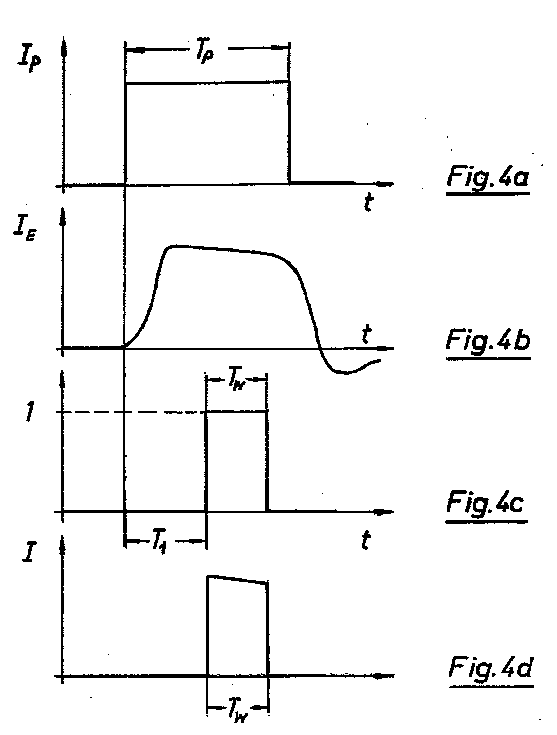

Fig.2 zeigt ein Ausführungsbeispiel einer elektronischen Schaltung zur Ansteuerung der Sendeelemente 2a, 2b und Auswertung der von den Empfangselementen 3a, 3b empfangenen Signale. Die jeweils zu einer Gruppe gehörigen Signale der Empfangselemente 3a bzw. 3b werden in einer elektronischen Einheit 12a bzw. 12b vorverstärkt, addiert und gefiltert, so daß lediglich Signale zur weiteren Auswertung gelangen, deren Modulation mit der Modulation der Sendeelemente 2a bzw. 2b übereinstimmt. Durch die Ansteuerschaltung 5 werden die Signale am Ausgang der elektronischen Einheit 12a, 12b, mittels elektronischer Schaltelemente 13a, 13b, wechselseitig einer gemeinsamen Verstärkerstufe 14, zugeführt. Die notwendige Verstärkung der Verstärkerstufe 14 kann durch den Errichter der Anlage von außen an einer Einrichtung 15 eingestellt werden, so daß das Ausgangssignal der Verstärkerstufe 14 einen vorgegebenen Pegel erhält. Durch diesen ein fachen Einstellvorgang kann die Flächensicherung der Geometrie der abzusichernden Fläche angepaßt werden. Weitere Einstellvorgänge sind für den Errichter nicht erforderlich. Die empfangenen Signale sind oft von Störungen überlagert (Rauschen). Um diese unerwünschten Störungen herauszufiltern kann es zweckmäßig sein, in der Verstärkerstufe 14, ein bekanntes sprungfähiges Tiefpaßfilter mit nichtlinearem Übertragungsverhalten anzuordnen. Hierdurch wird erreicht, daß schnelle Änderungen der empfangenen Signale unverzögert übertragen und trotzdem höherfrequente Störungen herausgefiltert werden. Diese mögliche Ausgestaltung trägt ebenfalls zur Verbesserung der Störungsunempfindlichkeit der Flächensicherung bei. Nach der Verstärkerstufe 14 werden die, von den beiden Empfängergruppen 3a, 3b kommenden Signale erneut in zwei getrennte Auswertekanäle aufgeteilt, mittels der elektronischen Schaltelemente 16a, 16b und zwei Sample and Hold Anordnungen 17a, 17b zugeführt. Die Schaltvorgänge der elektronischen Schaltelemente 13a, 13b bzw. 16a, 16b werden dabei von der Ansteuerschaltung 5 so koordiniert, daß Einschwingvorgänge der vorgeschalteten elektronischen Einheiten eliminiert werden. Dies ist in Fig.4 näher erläutert.

In Fig.4 ist ein möglicher zeitlicher Verlauf des Ansteuerimpulses der Pulsdauer $T_p$ der Sendeelemente, beispielsweise der Sendeelemente 2a, dargestellt. Fig.4b zeigt den durch Einschwingvorgänge veränderten Signalverlauf am Ausgang der Verstärkerstufe 14. Um diese Einschwingvorgänge zu eliminieren, bleiben die elektronischen Schaltelemente, beispielsweise 16a, während der Einschwingzeit des Pulses $T_1$ geöffnet und schließen nur wechselseitig und kurzzeitig während der Plateauzeit $T_w$, entsprechend Fig.4c. Die so elektronisch beschnittenen Impulse, entsprechend Fig.4d, werden wie beschrieben der nachgeschalteten Sample and Hold

Anordnung zugeführt. Am Ausgang der Sample and Hold Anordnung 17a (17b) steht daher der Analogwert (entsprechend Fig.4d) des empfangenen und verstärkten Summensignals, für einen Zeittakt, jeweils zur weiteren Signalaufbereitung zur Verfügung.

Um die Fehlalarmquote möglichst gering zu halten, ist es weiterhin erforderlich, eine langsam eintretende Verschmutzung der optischen Teile sowie Alterungsprozesse der Bauelemente in einem großen vorgegebenen Bereich zu kompensieren. Dies wird erfindungsgemäß dadurch erzielt, daß jeder Sample and Hold Anordnung 17a bzw. 17b zwei Integratoren 19a, 20a bzw. 19b, 20b parallel nachgeschaltet sind, mit unterschiedlichen Integrationszeiten und die Ausgänge der Integratoren 19a, 20a bzw. 19b, 20b jeweils mit einem Komparator 21a bzw. 21b, mit einstellbarem Schwellwert, verbunden sind. Der jeweilige Schwellwert eines Komparators 21a, 21b wird dabei zweckmäßigerweise so eingestellt, daß das vollständige Abdecken eines Sendeelements 2a bzw. 2b zu einer Änderung des Logik-Signals am Ausgang eines Komparators 21a bzw. 21b führt. Als Alarmkriterium wird eine gleichzeitige Änderung des Logik-Signals an den Ausgängen beider Komparatoren 21a und 21b verwendet. Die Überprüfung dieses Alarmkriteriums erfolgt in der Logik-Anordnung 22. Die nachgeschaltete Einrichtung 23 löst die entsprechende Meldung aus.

Wie erwähnt führt die Beeinflussung eines Auswertekanals nicht zur Auslösung von Alarm. Um unter diesen Bedingungen eine gezielte Sabotage zu verhindern, wird mittels der elektronischen Schaltelemente 18a bzw. 18b die Integration eines Integrators (Langzeit-Integration) mit der Änderung eines Logik-Signals an den Ausgängen von 21a bzw. 21b, durch die Logik-Anordnung 22 unterbrochen und die momentanen Werte an den Ausgängen von 20a bzw. 20b gespeichert. Da man davon ausgehen kann, daß die Beeinflussung eines Auswertekanals über einen längeren Zeitraum (z.B. mehrere Stunden) einen Sabotageversuch darstellt, erfolgt gegebenenfalls durch die Logik-Anordnung 22, über die ODER-Verknüpfung 26, die Meldung einer Störung durch die Einrichtung 27.

Eine weitere Erhöhung der Sabotagesicherheit wird durch eine Überwachung des Grundpegels und der Versorgungsspannung erzielt. Zu diesem Zwecke werden die Pegel am Ausgang der Sample and Hold Anordnung 17a bzw. 17b einer Einrichtung 24 zur Grundpegelüberwachung zugeführt, wobei die entsprechenden Schwellwerte des Grundpegels mittels einer Einstellvorrichtung 25 festgelegt werden. Eine langsame Verschmutzung der optischen Bauelemente wirkt sich beispielsweise in einer langsamen Verringerung des Grundpegels aus. Erreicht die Verschmutzung einen bestimmten Schwellwert, so erfolgt durch die Einrichtung 24, über die ODER-Verknüpfung 26, die Meldung einer Störung, durch die Einrichtung 27. Hierdurch wird ebenfalls sichergestellt, daß die Flächensicherung in einem weiten Bereich der Grundpegeleinstellung voll funktionsfähig ist. Um zu verhindern, daß durch die gezielte Einstrahlung eines geeignet modulierten Lichtes auf die Empfangselemente 3a, 3b eine Sabotagemöglichkeit gegeben ist, wird weiterhin auch eine Überwachung des Grundpegels bezüglich eines oberen Schwellwertes durchgeführt. Die entsprechenden Schwellwerte richten sich nach den Zulassungsrichtlinien für Sicherheitsanlagen des jeweiligen Landes.

Es ist zweckmäßig, die Logik Anordnung 22 so auszuführen, daß im unscharf-Zustand die einzelnen Auswertekanäle mittels einer ODER-Verknüpfung, im scharf-Zustand jedoch mittels einer UND-Verknüpfung verbunden sind.

Selbstverständlich ist es auch denkbar und möglich eine Grundpegelüberwachung an anderen Bezugspunkten der Schaltung vorzunehmen. So kann der Pegel am Ausgang der Verstärkerstufe 14 überwacht werden oder wie in Fig.2 gestrichen eingezeichnet, die Ausgangspegel nach den Integratoren 20a bzw. 20b der Einrichtung 24 zugeführt und überwacht werden.

Der elektronische Aufbau der Ansteuer-und Auswerteschaltung gemäß Fig.2 eignet sich insbesondere für den Einsatz von Gate-Arrays und Mikroprozessoren. Hierdurch kann eine vorteilhafte Verringerung der Baugröße erzielt werden.

In Fig.3a bzw. 3b ist ein möglicher zeitlicher Verlauf der Ansteuerimpulse der Sendeelemente 2a bzw. 2b dargestellt. Die Dauer eines Sendeimpulses ist mit $T_p$, die Zeitdauer zwischen zwei Sendeimpulsen mit T bezeichnet. Die Umschaltzeit ist $T_s$. Durch die Aufteilung $T_p/T$ wird die mittlere Stromaufnahme der Sendeelemente 2a, 2b festgelegt.

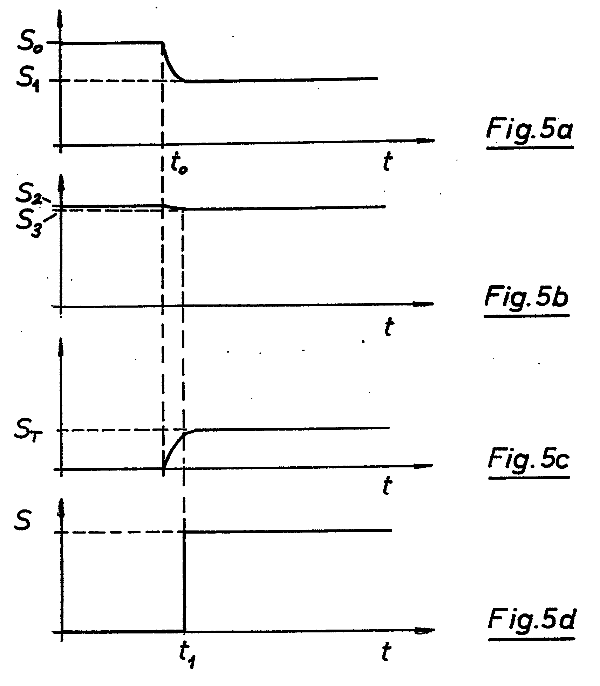

In den Figuren 5a - 5d ist der zeitliche Verlauf der Spannungen an verschiedenen Punkten der Schaltung gemäß Fig.2 eingezeichnet. Das Abdecken eines Sendeelements durch den Errichter zum Zeitpunkt $t_0$ bewirkt am Ausgang des Integrators mit der kleinen Zeitkonstante (Kurzzeit-Integrator) 19a und/oder 19b einen schnellen Einstellvorgang vom Pegelwert $S_0$ auf den neuen Pegelwert $S_1$, gemäß Fig.5a. Fig.5b zeigt den zeitlichen Signalverlauf am Ausgang des Integrators mit der großen Zeitkonstante (Langzeit-Integrator) 20a und/oder 20b. Das Differenzsignal ist in Fig.5c dargestellt. Überschreitet das Differenz signal einen bestimmten Schwellwert $S_T$, so ändert sich das Logik-Signal des entsprechenden Komparators 21a und/oder 21b, wie in Fig.5d, gezeigt. Die Änderung des Logik-Signals bewirkt ein Öffnen der elektronischen Schaltelemente 18a und/oder 18b, wodurch die Langzeit Integration zum Zeitpunkt $t_1$ unterbrochen und der momentane Wert am Ausgang des Langzeit-Integrators 20a und/oder 20b gespeichert wird. Hierdurch wird sichergestellt, daß gemäß Fig.5d ein Logik-Signal am Ausgang des Komparators 21a und/oder 21b ansteht, solange sich der störende Gegenstand im Strahlenfeld der Flächensicherung befindet.

Selbstverständlich ist es auch denkbar und möglich, die entsprechenden Signalwerte digital abzuspeichern und weiterzuverarbeiten. Dies bietet sich insbesondere bei Verwendung der Flächensicherung als Maschinensicherung an.

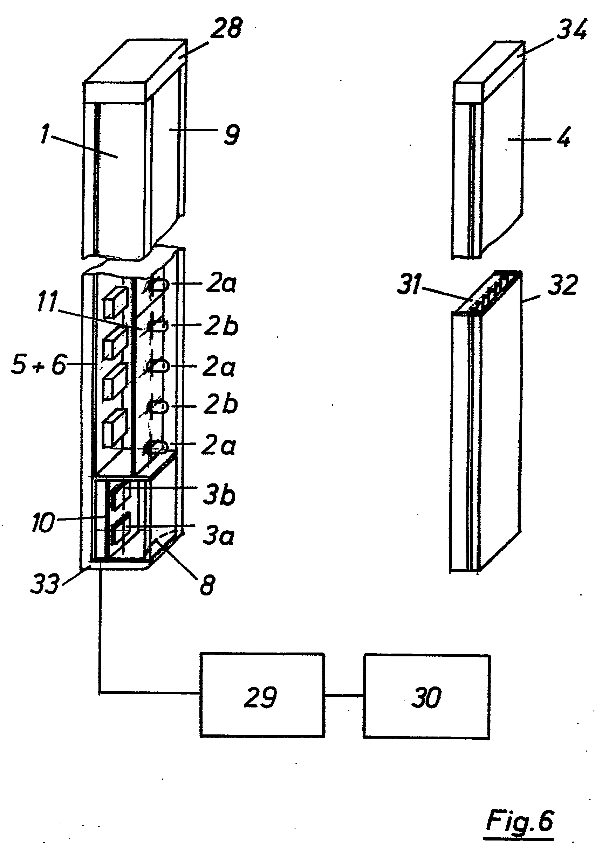

Fig.6 zeigt eine mögliche konstruktive Ausgestaltung der Flächensicherung, bestehend aus einer Reflexionsleiste 4 und einer Sende- und Empfangsleiste 1. In die Sende-und Empfangsleiste 1 sind die Sendermodule 11 und Empfängermodule 10 eingebracht, sowie die Ansteuerelektronik 5 und Auswerteelektronik 6. Die Sendermodule 11 sind hier aus zwei Gruppen von Sendeelementen 2a und 2b, die Empfängermodule aus zwei Gruppen von Empfangselementen 3a und 3b auggebaut. Vor den Sende-und Empfangselementen befindet sich hier eine Zylinderlinse 8. Durch Endkappen 32 wird das Profil 33 der Sende- und Empfangsleiste 1 an den Enden abgeschlossen. Ein Infrarotfilter 9 ist ebenfalls vor den Sendermodulen 11 und Empfängermodulen 10, in das Profil 33 eingebracht. Das Entfernen einer Endkappe bewirkt, durch Betätigung eines zur Sabotagesicherung angebrachten Kontakts, eine entsprechende Meldung. Die Zuleitungen der Sende- und Empfangsleiste 1 werden durch den Errichter der Flächensicherung, in einem Klemmkasten 29, mit der Zentrale 30 der Alarmanlage verbunden.

Die Reflexionsleiste 4 besteht aus einem Halteprofil 32, in welches mehrere Reflektoren 31 eingebracht und mittels geeigneter Reflektorendkappen 34 abgeschlossen sind. Die Reflektoren 31 sind hier beispielhaft aus einer Vielzahl parallel verlaufender 90 Grad Prismen aufgebaut, so daß die Reflexion eines Lichtstrahls vorzugsweise in der, durch Sende- und Empfangsleiste 1 und Reflexionsleiste 4 aufgespannten Ebene erfolgt. Die Länge der Reflektoren 31 ist mit der Länge der Sendemodule 11 abgestimmt.

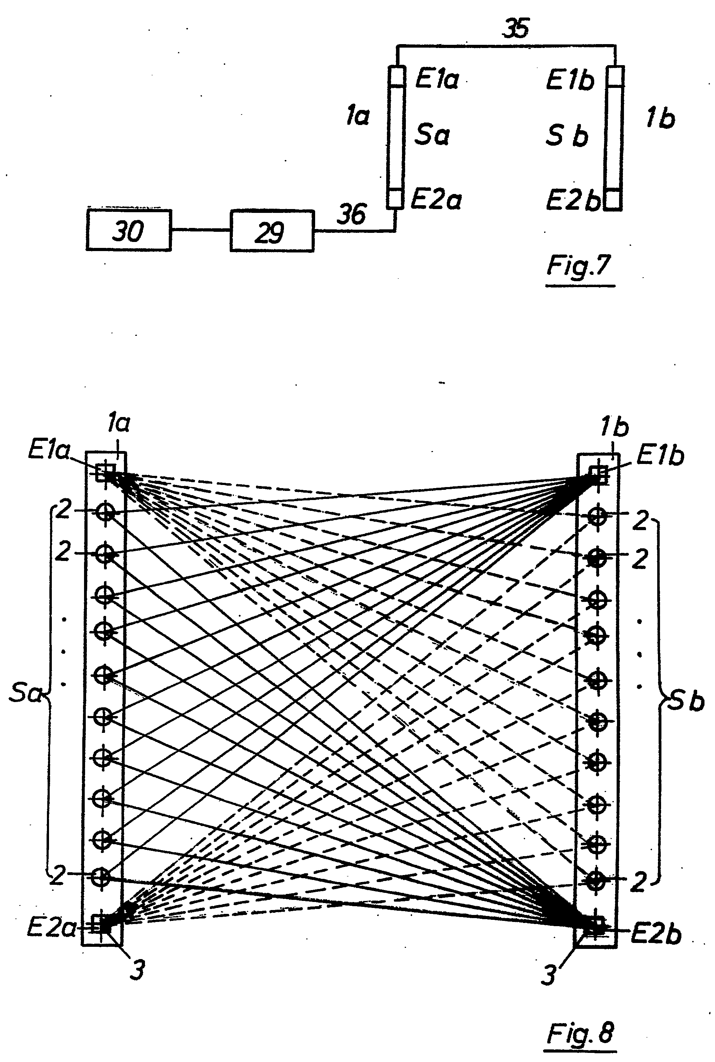

Fig.7 zeigt ein Ausführungsbeispiel der erfindungsgemäßen Flächensicherung, bestehend aus zwei, sich gegenüber befindlichen Sende- und Empfangsleisten 1a, 1b, die durch Zuleitungen 35, miteinander verbunden sind und durch Zuleitungen 36 über einen Klemmkasten 29 mit der Zentrale 30 der Alarmanlage. Die einzelnen Empfangsbereiche E1a, E2a und E1b, E2b sowie die Sendebereiche Sa und Sb der Sende- und Empfangsleiste 1a und 1b sind in der bereits beschriebenen Art und Weise aufgebaut.

Fig.8 dient der Veranschaulichung der Wirkungsweise der Flächensicherung gemäß Fig.7. Die bei-den Sende- und Empfangsleisten 1a und 1b sind ent-sprechend in Empfangsbereiche E1a, E2a, E1b, E2b und Sendebereiche Sa, Sb unterteilt. Wie eingangs erwähnt, sind die Sende- und Empfangsbereiche in mindestens zwei Gruppen von Sendeelementen und Empfangselementen unterteilt, die wechselseitig, d.h. nacheinander angesteuert werden. Als Alarmkriterium muß eine unzulässige Beeinflussung von mindestens zwei Auswertekanälen erfolgen. Die in Fig.8 eingezeichneten Bauelemente, Sendeelemente 2 und Empfangselemente 3, sind jeweils zu einer Gruppe gehörig zu denken. Die Bauelemente der anderen Gruppen sind zwischen den eingezeichneten Bauelementen angeordnet, Da sinngemäß die flächendeckende Absicherung für jede Gruppe von Sende- und Empfangselemente 2, 3 zutrifft, wird hier lediglich die Wirkungsweise dieser erfindungsgemäßen Ausgestaltung an einer Gruppe von Sende- und Empfangselementen 2, 3 erklärt. Eine flächendeckende Absicherung ist durch die Forderung gegeben, daß nur dann eine Änderung des Logik- Signals eines Auswertekanals vorliegt, wenn entweder die Empfangsbereiche (E1b oder E2a) und (E1a oder E2b) unzulässige Signaländerungen registrieren.

Selbstverständlich sind auch andere Logik-Verknüpfungen der Auswertekanäle und/oder Zuordnungen von Empfangs-und Sendebereichen denkbar und möglich. Dies soll jedoch hier nicht im einzelnen erläutert werden.

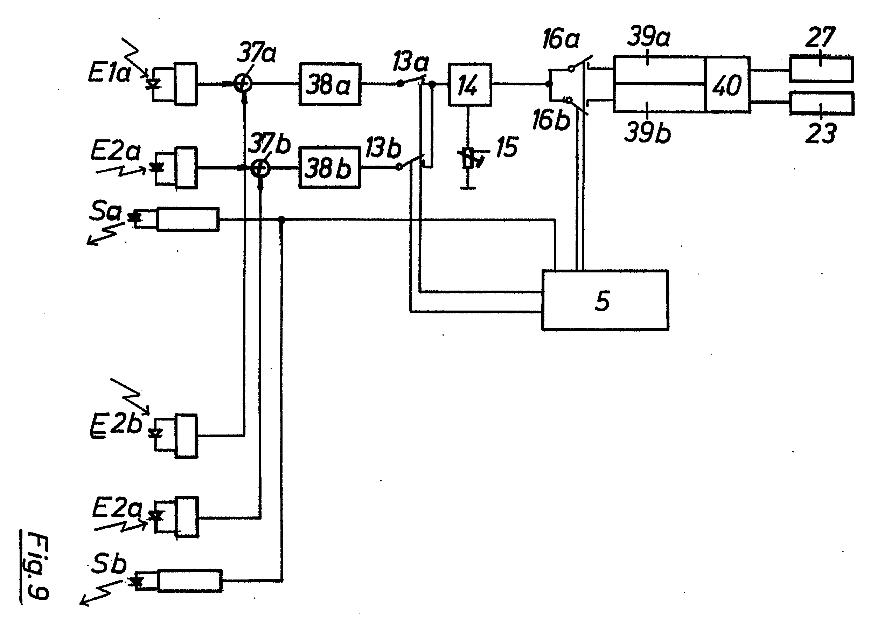

Fig. 9 zeigt ein Ausführungsbeispiel einer Schaltung der Flächensicherung gemäß Fig.7. Die Signale der einzelnen Empfangsbereiche E1a und E2b bzw. E2a und E1b werden in der Einrichtung 37a bzw. 37b addiert und in den selektiven Verstärkerstufen 38a bzw. 38b gefiltert und vorverstärkt. Die elektronischen Schaltelemente 13a bzw. 13b führen die Signale wechselseitig einer gemeinsamen Verstärkerstufe 14 zu, deren Verstärkung über eine Einrichtung 15 von außen eingestellt werden kann, so daß das Ausgangssignal der Verstärkerstufe 14 einen vorgegebenen Pegel erhält. Hierdurch wird die Flächensicherung den räumlichen Gegebenheiten angepaßt. Nach der Verstärkerstufe 14 werden die Signale erneut durch die elektronischen Schaltelemente 39a und 39b aufgeteilt. Die Ansteuerschaltung 5 koordiniert die elektronischen Schaltvorgänge und bewirkt eine Aufbereitung der elektronischen Impulse am Eingang der Auswertekanäle 39a, 39b, entsprechend Fig.4. Ein Auswertekanal 39a bzw. 39b besteht aus einer Sample and Hold Anord-nung, einer nachgeschalteten Lang-und Kurzzeit-Integration und einem Komparator, entsprechend Fig.2. Die Ausweteschaltung 40, wertet die gewon-nen Signale aus, unter Berücksichtigung der vorgegebenen Alarm-und Störungskriterien. Ein Alarm wird durch die Einrichtung 23, eine Störung durch die Einrichtung 27 angezeigt.

Durch ein nebeneinander anordnen von verschiedenen Sendermodulen und Empfängermodulen können selbst große Flächen wirkungsvoll abgesichert werden.

Es ist ohne weiteres einzusehen, daß die Flächensicherung als Durchgriffsicherung oder Durchgangsicherung verwendet werden kann. Hierzu ist es lediglich erforderlich, durch unterschiedliche Wahl des Abstandes zwischen Sendeelementen und/oder Empfangselementen die räumliche Auflösung der Flächensicherung geeignet festzulegen.

Die Flächensicherung eignet sich insbesondere auch zur Maschinensteuerung und/oder Maschi-nensicherung. Den Anforderungen der Berufsver-bände kann dadurch entsprochen werden, daß die in Gruppen zusammengefassten Sendeelemente und Empfangselemente über die getrennten Auswertekanäle einer Auswerteschaltung zugeführt werden, die im wesentlichen als ODER-Verknüpfung ausgebildet ist. Jede Beeinflussung eines Auswertekanals führt daher zu einem entsprechenden Steuersignal. Der Ausfall einer Gruppe von Sende-und/oder Empfangselementen wird ebenfalls angezeigt.

Die beschriebene Flächensicherung kann ebenfalls vorteilhaft als Sensor eingesetzt werden, insbesondere zur Zeitmessung und/oder Geschwindigkeitsmessung.

**Patentansprüche**

1. Flächensicherung, bestehend aus Sende- (2) und Empfangselementen (3), die in einer Fläche angeordnet sind und bei der bei Beeinflussung der Strahlung im Bereich der Fläche eine Meldung erfolgt, wobei entlang einer Seite der abzusichernden Fläche eine Sende- und Empfangsleiste (1) angeordnet ist, die in Sendebereiche und Empfangsbereiche unterteilt ist, dadurch gekennzeichnet, daß die Sendebereiche aus mehreren, nebeneinander angeordneten Sendeelementen (2a, b) bestehen, die in mindestens zwei Gruppen zusammengefaßt sind und die Empfangsbereiche aus mehreren, nebeneinander angeordneten Empfangselementen (3a, b) bestehen, wobei die Empfangselemente ebenfalls in mindestens zwei Gruppen zusammengefaßt sind und die Flächensicherung so ausgestaltet ist, daß das von den Sendeelementen ausgehende modulierte Licht entweder nach Reflexion an einer entlang der anderen Seite angeordneten Reflexionsleiste (4), welche die Strahlung vorwiegend in der durch Sende- und Empfangsleiste und Reflexionsleiste aufgespannten Ebene reflektiert, auf die Empfangsbereiche gelangt oder direkt auf die Empfangsbereiche einer weiteren Sende- und Empfangsleiste gelangt, die anstelle der Reflexionsleiste entlang der anderen Seite angeordnet ist und daß durch eine Ansteuerschaltung (5) den einzelnen, zeitversetzt arbeitenden Gruppen von Sendeelementen jeweils bestimmte Gruppen von Empfangselementen zugeordnet werden, daß eine Mehrkanalauswertung (6), die mit der Ansteuerschaltung gekoppelt ist, vorgesehen ist, die die von den verschiedenen Gruppen von Empfangselementen ausgehenden Signale vergleicht.

2. Flächensicherung nach Anspruch 1, dadurch gekennzeichnet, daß als Sendeelemente (2a, b) lichtemittierende Dioden verwendet werden und die Sendeelemente (2a, b) in zwei Gruppen unterteilt sind, wobei die Gruppeneinteilung so erfolgt, daß die nebeneinander angeordneten Sendeelemente (2a, b) abwechselnd zur einen oder anderen Gruppe gehören und die Sendeelemente (2a, b) der jeweiligen Gruppe wechselseitig durch die Ansteuerschaltung (5) modulierte Lichtimpulse aussenden und die Empfangsbereiche aus zwei Empfangselementen (3a, b) bestehen, denen zwei Auswertekanäle nachgeschaltet sind, wobei durch die Ansteuerschaltung (5) jeweils ein Auswertekanal einer Gruppe von Sendeelementen (2a, b) zugeordnet ist und nur dann eine Alarmanzeige erfolgt, wenn mindestens zwei benachbarte Sendeelemente (2a, b) und/oder Empfangselemente (3a, b) über einen durch die Ansteuerschaltung (5) festgelegten Zeitraum abgedeckt sind, d.h. wenn beide Auswertekanäle eine unzulässige Signaländerung detektieren.

3. Flächensicherung nach den Ansprüchen 1 und 2, dadurch gekennzeichnet, daß die Flächensicherung vorwiegend zur Maschinensicherung und Maschinensteuerung eingesetzt wird und als Steuerungskriterium eine unzulässige Beeinflussung entweder des einen oder des anderen Auswertekanals verwendet wird.

4. Flächensicherung nach den Ansprüchen 1 bis 3, dadurch gekennzeichnet, daß die jeweils zu einer Gruppe gehörenden Signale der Empfangselemente (3a, b) addiert werden und die Ansteuerschaltung (5) nacheinander jeweils die Summensignale der Empfängergruppen über einen gemeinsamen selektiven Verstärker (14) verstärkt und nach der Verstärkung durch die Ansteuerschaltung (5) erneut eine Trennung der Signale erfolgt und die Werte der Signale in einer nachgeschalteten Sample and Hold Anordnung (17a, b) für einen Zeittakt gespeichert werden und jeder Sample and Hold Anordnung (17a, b) zwei Integratoren (19, 20) parallel nachgeschaltet sind, mit unterschiedlichen Integrationszeiten und die Ausgänge der Integratoren (19, 20) mit einem Komparator (21a, b) mit einstellbarem Schwellwert verbunden sind und bei einer unzulässigen Beeinflussung eines Auswertekanals der Wert der Langzeit-Integration gespeichert werden kann, solange die unzulässige Beeinflussung gegeben ist.

5. Flächensicherung nach den Ansprüchen 1 bis 3, dadurch gekennzeichnet, daß jeder Auswertekanal einen selektiven Verstärker (14) und eine Sample and Hold Anordnung (17a, b) enthält sowie zwei mit dem Ausgang des Verstärkers verbundene parallel geschaltete Integratoren (19, 20) mit unterschiedlichen Integrationszeiten und einen mit den Ausgängen der Integratoren verbundenen Komparator (21) enthält, mit einstellbarem Schwellwert und daß bei einer unzulässigen Beeinflussung der Wert der Langzeit-Integration gespeichert werden kann, solange die Beeinflussung gegeben ist.

6. Flächensicherung nach den Ansprüchen 1 bis 5, dadurch gekennzeichnet, daß die zeitliche Aktivierung der Sample and Hold Anordnung (17) durch die Ansteuerschaltung (5) so erfolgt, daß Einschwingvorgänge der Impulse am Ausgang des selektiven Verstärkers (14) nicht berücksichtigt werden.

7. Flächensicherung nach den Ansprüchen 1 bis 6, dadurch gekennzeichnet, daß eine Überwachung der Intensität der ausgesandten und/oder empfangenen Lichtimpulse erfolgt sowie der Versorgungsspannung und beim Über- und/oder Unterschreiten vorgegebener Schwellwerte eine Meldung erfolgt.

8. Flächensicherung nach den Ansprüchen 1 bis 7, dadurch gekennzeichnet, daß eine Anordnung zur Regelung des Pulsstromes der Sendeelemente (2a, b) und/oder zur Regelung der Verstärkung vorgesehen ist, so daß die empfangenen Signale am Ausgang des selektiven Verstärkers (14) einen konstanten Langzeitmittelwert besitzen und beim Erreichen vorgegebener Grenzwerte des Regelbereichs eine Meldung erfolgt.

9. Flächensicherung nach Anspruch 1 und einem oder mehreren der folgenden Ansprüche, gekennzeichnet durch ihre Anwendung als Durchgangs- oder Durchgriffsicherung oder als Maschinensicherung.

10. Flächensicherung nach Anspruch 1 und einem oder mehreren der folgenden Ansprüche, gekennzeichnet durch ihre Anwendung zur Zeit- oder Geschwindigkeitsmessung, durch Anordnung zweier als Durchgriffsicherung ausgebildeter Flächensicherungen in räumlichem Abstand voneinander.

## Claims

1. An area-security system consisting of transmitting (2) and receiving elements (3) arranged in an area and producing a report if the radiation is influenced within the secured area that along one side of the area to be secured a transmitting and receiving rail (1) is arranged, which is subdivided into transmitting regions and receiving regions, characterized by the fact that the transmitting regions consisting of several transmitting elements (2 a, b) arranged alongside of each other and combined in at least two groups; the receiving elements consisting of several receiving elements (3 a, b) arranged alongside of each other whereby the receiving elements are combined as well in at least two groups and where the area-security system is built in such a way that the modulated light being emitted by the transmitting elements arrives in the receiving regions either after reflection on a reflection rail (4) arranged along the other side, which reflects the radiation mainly in the plane created by the transmitting and receiving rail and the reflection rail, or directly on the receiving regions of another transmitting and receiving rail arranged along the other side instead of the reflection rail, and where the individual groups of transmitting elements are assigned to certain groups of receiving elements via a control circuit (5) and the signals emitted by the different groups of transmitting elements are shifted against each other and the signals of the receiving elements are evaluated according to different criteria in a multi-channel evaluation (6) linked to the control circuit.

2. An aera-security system according to claim 1, characterized by the fact that light-emitting diodes are used as transmitting elements (2 a, b) and that the transmitting elements (2 a, b) are subdivided into two groups, the subdivision into groups being such that the transmitting elements (2 a, b) which are arranged alongside of each other belong alternately to one or the other group and that the transmitting elements (2 a, b) of the respective group emit light pulses modulated in alternation through the control circuit (5) and the receiving zones consist of two receiving elements (3 a, b) followed by two evaluation channels, one evaluation channel being associated by the control circuit (5) in each case to one group of transmitting elements (2 a, b) and that an alarm will be given off only if at least two adjacent transmitting elements (2 a, b) and/or receiving elements (3 a, b) are covered during a period of time determined by the control circuit (5), i.e. when both evaluation channels detect an impermissible change in signal.

3. An area-security system according to claims 1 and 2, characterized by the fact the area-security system is mainly used for machine security and machine control and that the control criterium consists in an impermissible influencing either of one or of the other evaluation channel.

4. An area-security system according to claims 1 through 3, characterized by the fact that the signals of the receiving elements (3 a, b) belonging in each case to one group are added up and the control circuit (5) successively amplifies the summation signals of the respective receiving groups via a common selective amplifier (14) and that the thus-amplified signals are separated again by the control circuit and that the values of the signals are stored in a subsequent sample-and-hold arrangement (17 a, b) for one time cycle and that behind each sample-and-hold arrangement (17 a, b) two integrators (19, 20) with different integration times are connected in parallel and the outputs of the integrators (19, 20) are connected to a comparator (21 a, b) of adjustable threshold value and that in the event of an impermissible influencing of an evaluation channel, the value of the long-time integration can be stored as long as the impermissible influence exists.

5. An area-security system according to the claims 1 through 3, characterized by the fact that each evaluation channel contains a selective amplifier (14) and a sample-and-hold arrangement (17 a, b) as well as two parallel-connected integrators (19, 20) with different integration times which are connected to the output of the amplifier, and a comparator (21) of adjustable threshold value which is connected to the outputs of the integrators, and that in case of an impermissible influencing the value of the long-time integration can be stored as long as the influence exists.

6. An area-security system according to claims 1 through 5, characterized by the fact that the temporal activation of the sample-and-hold arrangement (17) through the control circuit (5) takes place such that the transient effects of the pulses at the output of the selective amplifier (14) are not taken into consideration.

7. An area-security system according to claims 1 through 6, characterized by the fact that a monitoring of the intensity of the emitted and/or received light pulses as well as of the supply voltage takes place, and a report is given off in the event that the values exceed or drop under the predetermined threshold values.

8. An area-security system according to claims 1 through 7, characterized by the fact that an arrangement for regulating the pulse current of the transmitting elements (3 a, b) and/or for regulating the amplification is provided so that the received signals have a constant long-time average value at the output of the selective amplifier (14), and that a report is given off when predetermined limit values of the regulation range are reached.

9. An area-security system according to claim 1 and one or more of the following claims, characterized by its application as passage security or penetration security or as machine security.

10. An area-security system according to claim 1 and one or more of the following claims, characterized by its application to measure time or speed by arranging two area-security devices designed as penetration security devices at a certain distance from each other.

## Revendications

1. Installation de sûreté pour la protection d'une zone plane comprenant des éléments émetteurs (2) et récepteurs (3) disposés de façon plane et qui déclanche un signal dès que le rayonnement dans la zone plane est dérangé, une bande d'émission-réception (1) étant disposée le long d'un côté de la zone plane à protéger et qui est composé de parties d'émission et de réception, caractérisée en ce que les parties d'émission consistent en plusieurs éléments émetteurs (2a, b) disposés de manière adjacente qui sont au moins groupés en deux et les parties de réception qui consistent en plusieurs éléments récepteurs (3a, b) disposés de manière adjacente et également groupés au moins en deux et que ladite installation de sûreté est disposée de manière que la lumière modulée émise des éléments émetteurs arrive soit au zones de réception par réflection par une bande reflètante (4), placée le long du côté opposé et qui reflète le rayonnement surtout dans la plaine définie par la bande d'émission-réception d'un côté et par la bande réflètante de l'autre côté, soit de façon directe aux zones de réception d'une autre bande d'émission-réception remplaçant dans ce cas la bande réflètante le long du côté opposé, et qu'un dispositif sélecteur (5) affecte les différents groupes d'éléments émetteurs travaillant à un décalage de temps de manière qu'ils soient toujours attribués à certains groupes d'éléments récepteurs et qu'il soit prévu une évaluation par plusieurs canaux (6) couplés au dispositif sélecteur qui compare les signaux provenant des différents groupes de réception.

2. Installation de sûreté pour la protection d'une zone plane suivant la revendication 1, caractérisée en ce que des diodes émettant de la lumière sont utilisées comme éléments émetteurs (2a, b) et que les éléments émetteurs (2a, b) sont partagés en deux groupes tel que les éléments émetteurs adjacents (2a, b) font toujours partie d'un groupe ou de l'autre façon alternante et que les éléments émetteurs (2a, b) de chaque groupe émettent des impulsions lumineuses modulées de façon alternante, commandés par le dispositif de sélection (5) et que les parties de réception consistent en deux éléments récepteurs (3a, b) qui sont suivis de deux canaux d'évaluation tel qu'un canal d'évaluation est toujours arribué à un groupe d'éléments émetteurs (2a, b) par le dispositif de sélection (5) et qu'un signal d'alarme n'apparaît que si au moins deux éléments adjacents d'émission (2a, b) et/ou de réception (3a, b) restent dans l'état modifié pendant un délai de temps déterminé par le dispositif de sélection (5), c'est-à-dire que les deux canaux d'évaluation détectent une modification non-admise des signaux.

3. Installation de sûreté pour la protection d'une zone plane suivant les revendications 1et 2, caractérisée en ce que l'installation de sûreté pour la protection d'une zone plane sert de préférence à la sécurité ou/et à la commande de machines et qu'une modification non-admise du signal de l'un ou de l'autre canal d'évaluation est utilisé comme critère de commande.

4. Installation de sûreté pour la protection d'une zone plane suivant les revendications 1 à 3, caractérisé en ce que tous les signaux des éléments-récepteurs (3a, b) appartenant à chaque groupe sont additionnés et que le dispositif réflecteur (5) amplifie les signaux additionnés de chaque groupe récepteur l'un après l'autre au moyen d'un amplificateur sélectif commun (14) et qu'après l'amplification par le dispositif de sélection une séparation des signaux est effectuée de nouveau et les valeurs des signaux sont enregistrées pour une période par un dispositif "sample and hold" (17a, b) intercalé à la suite et que chaque dispositif "sample and hold" (17a, b) est suivi en parallèle par deux intégrateurs (19, 20) à des temps d'intégration différents et les sorties des intégrateurs (19, 20) sont reliées à un comparateur (21a, b) à seuil réglable et que lors d'une modification non-admise d'un canal d'évaluation la valeur de l'intégration à longue durée peut être enregistrée tant que la modification non-admise dure.

5. Installation de sûreté pour la protection d'une zone plane suivant les revendications 1 à 3, caractérisée en ce que chaque canal d'évaluation comprend un amplificateur sélectif (14) et un dispositif "sample and hold" (17a, b) ainsi que deux intégrateurs (19, 20) mises en parallèle et reliés à la sortie de l'amplificateur, ces intégrateurs travaillant à des temps d'intégration différents ainsi qu'un comparateur (21) relié aux sorties des intégrateurs et à seuil réglable et que lors d'une modification non-admise la valeur de l'intégration à longue durée peut être enregistrée tant que la modification dure.

6. Installation de sûreté pour la protection d'une zone plane suivant les revendications 1 à 5, caractérisée en ce que l'activation chronologique du dispositif "sample and hold" (17) est effectuée par le dispositif de sélection (5) de façon que les phénomènes tansitoires des impulsions produites à la sortie de l'amplificateur sélectif (14) restent sans effet.

7. Installation de sûreté pour la protection d'une zone plane suivant les revendications 1 à 6, caractérisée en ce que l'intensité des impulsions lumineuses émises et/ou reçues est aussi bien surveillée que la tension d'alimentation et qu'un signal et provoqué dès qu'un seuil fixé à l'avance est dépassé vers le haut ou vers le bas.

8. Installation de sûreté pour la protection d'une zone plane suivant les revendications 1 à 7, caractérisée en ce qu'un dispositif est prévu réglant le courant des impulsions des éléments émetteurs (2a, b) et/ou des amplifications tel que les signaux reçus à la sortie de l'amplificateur sélectif (14) montrent une valeur moyenne à longue durée constante et qu'un alarme est déclanché dès qu'une limite du domaine de réglage et fixée à l'avance est atteinte.

9. Installation de sûreté pour la protection d'une zone plane suivant la revendication 1 et une ou plusieurs autres revendications, caractérisée en ce qu'elle sert de dispositif de sécurité à éviter une pénétration ou un passage non-admis ou bien de garantir la sécurité de machine.

10. Installation de sûreté pour la protection d'une zone plane suivant la revendication 1 et une ou plusieurs autres revendications, caractérisée en ce qu'elle sert à mesurer le temps ou la vitesse consistant en deux installations de sûreté pour la protection d'une zone plane réalisées comme dispositif à éviter une pénétration non-admise et placées à une certaine distance l'une de l'autre.

EP 0 220 361 B1

Fig.1

*Fig.2*

$I_{pa}$

$T_P$ $\quad T \quad$ $T_P$

$t$

*Fig. 3a*

$I_{pb}$

$T_s$

$t$

*Fig. 3b*

EP 0 220 361 B1

Fig. 4a

Fig. 4b

Fig. 4c

Fig. 4d

Fig.5a

Fig.5b

Fig.5c

Fig.5d

*Fig.6*

_Fig.7_

_Fig.8_

Fig. 9

EP 0 220 361 B1